# EUROPÄISCHE PATENTANMELDUNG

(11) **EP 1 837 258 A2**
(43) Veröffentlichungstag der Anmeldung: **26.09.2007**
(21) Anmeldenummer: 07005803.7
(22) Anmeldetag: 21.03.2007
(51) Int. Cl.: B60S 1/38

(54) **Wischblatt**

(30) Priorität: 22.03.2006 DE 202006004584 U
(71) Anmelder: AGOR GmbH & Co. KG, 99869 Schwabhausen (DE)
(72) Erfinder: Loose, Felix, 99689 Schwabhausen (DE)
(74) Vertreter: Grünecker, Kinkeldey, Stockmair & Schwanhäusser Anwaltssozietät

(57) **Zusammenfassung**

Mit der vorliegenden Erfindung wird ein Wischblatt zum Reinigen von Scheiben, insbesondere von Kraftfahrzeugen, mit einer gummielastischen Wischleiste (2) vorgestellt, die an einem bandartig langgestreckten federelastischen Tragelement (6) angeordnet ist, welches an einer der Wischleiste (2) gegenüberliegenden Oberseite von einer Windabweisleiste (10) abgedeckt ist. Zur Schaffung eines Wischblatts, dessen Aerodynamik verbessert ist und dessen Windabweisleiste (10) einfacher mit dem Tragelement verbunden werden kann, wird mit der vorliegenden Erfindung vorgeschlagen, die Windabweisleiste (10) mit einem sich über die gesamte Breite des Tragelementes (6) erstreckenden und das Tragelement (6) an seiner Außenseite umgreifenden Befestigungsabschnitt (20) aus einer Hartkomponente auszubilden, der mit einem Windabweiserabschnitt (18) aus einer Weichkomponente mittels Co-Extrusion hergestellt ist.

## Beschreibung

Die vorliegende Erfindung betrifft ein Wischblatt zum Reinigen von Scheiben, insbesondere von Kraftfahrzeugen, mit einer gummielastischen Wischleiste, die an einem bandartig lang gestreckten federelastischen Tragelement angeordnet ist, welches an der der Wischleiste gegenüberliegenden Oberseite von einer Windabweisleiste abgedeckt ist.

Ein derartiges Wischblatt ist beispielsweise aus der DE 103 35 394 bekannt. Die Windabweisleiste umfasst bei diesem Stand der Technik ein Spoilerelement, welches sich nahezu über die gesamte Breite des Tragelementes erstreckt und aus einem weichelastischen Kunststoff gebildet ist und durch Koextrusion im Bereich der seitlichen Ränder des Tragelementes Krallen aus einer Hartkomponente umfasst, welche die Außenseiten des Tragelementes umgreifen.

Die Krallen, die sich nur zu einem sehr geringen Teil an der Oberseite des Tragelementes befinden und die Unterseite relativ großflächig umgreifen, ermöglichen ein Aufclipsen der Windabweisleiste auf das Tragelement. Die hierzu erforderliche Biegbarkeit des Spoilerelementes wird dadurch gewährleistet, dass dieses einen dreieckigen Freiraum einschließt. Dementsprechend kann die Windabweisleiste auch im Bereich einer konkav gebogenen und letztendlich rechtwinklig sich zu dem Tragelement erstreckenden erhabenen Anströmfläche im Wesentlichen als Bauteil gleicher Wandstärke ausgeformt werden, was die Herstellung der Windabweisleiste mittels Extrusion wie auch die Montage der Windabweisleiste an dem Tragelement durch Aufclipsen vereinfacht.

Mit der vorliegenden Erfindung soll ein Wischblatt mit verbesserter Aerodynamik angegeben werden, dessen Windabweisleiste einfacher mit dem Tragelement verbunden werden kann. Insbesondere will die vorliegende Erfindung die Windabweisleiste zu dem Wischblatt verbessern.

Zur Lösung dieses Problems wird mit der vorliegenden Erfindung ein Wischblatt mit den Merkmalen von Anspruch 1 vorgeschlagen. Dieses unterscheidet sich von dem gattungsbildenden Wischblatt dadurch, dass die Windabweisleiste einen sich über die gesamte Breite des Tragelementes erstreckenden und das Tragelement an seiner Außenseite umgreifenden Befestigungsabschnitt aus einer Hartkomponente und einen damit koextrudierten Windabweiserabschnitt aus einer Weichkomponente umfasst. Die Hartkomponente hat eine höhere Shore-Härte als die Weichkomponente. Die Hartkomponente hat aber im Hinblick auf das im Nachfolgenden noch näher erläuterte Anbringen der Windabweisleiste an das Tragelement eine hinreichende Elastizität.

Die Windabweisleiste des erfindungsgemäßen Wischblattes hat einen Befestigungsabschnitt, der sich über die gesamte Breite des Tragelementes erstreckt und sich somit einfach und dauerhaft auf das Tragelement aufclipsen und/oder in Längsrichtung des Wischblattes aufschieben lässt. Die Festigkeit der Windabweisleiste insbesondere im Hinblick auf eine dauerhafte und zuverlässige Befestigung an dem Tragelement kann so gewählt werden, dass einerseits die Windabweisleiste bei der Montage hinreichend einfach auf das Tragelement aufgeclipst werden kann, andererseits aber auch bei hohen Windgeschwindigkeiten eine Beeinträchtigung der Clipsverbindung zwischen der Windabweisleiste und dem Tragelement nicht zu befürchten ist.

Bevorzugte Weiterbildungen des erfindungsgemäßen Wischblattes sind in den Unteransprüchen angegeben.

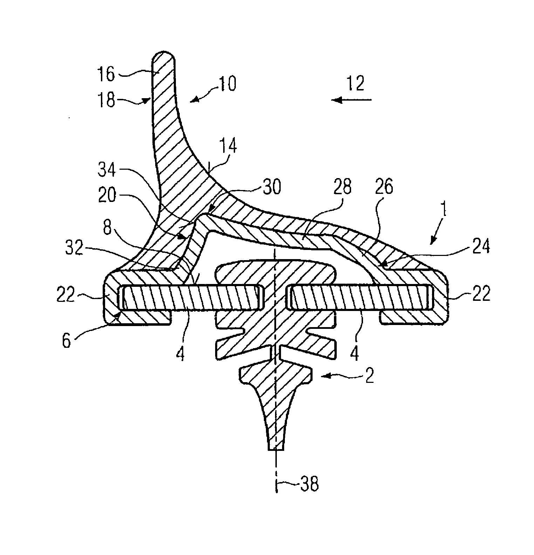

Weitere Einzelheiten, Vorteile und Merkmale der vorliegenden Erfindung ergeben sich aus der nachfolgenden Beschreibung eines Ausführungsbeispiels in Verbindung mit der Zeichnung, die eine Querschnittsansicht durch ein Ausführungsbeispiel eines erfindungsgemäßen Wischblattes zeigt.

Das in der Zeichnung gezeigte Ausführungsbeispiel eines Wischblattes 1 hat eine Wischleiste 2, die formschlüssig zwischen zwei federelastischen Blechstreifen 4 gehalten ist, welche als Teil eines Tragelementes 6 verwirklicht sind. Das Tragelement 6 kann ferner hier nicht dargestellte und die Blechstreifen endseitig fassende Kappen sowie ein Anschlussstück zur Befestigung des Wischblattes an den Wischerarmen eines Kraftfahrzeuges umfassen. Das Tragelement 6 ist in an sich bekannter Weise durch Vorbiegen der Blechstreifen 4 entsprechend der Krümmung der zu wischenden Scheibe eines Fahrzeuges gekrümmt, und aufgrund seiner Elastizität geeignet, der wechselnden Kontur der zu reinigenden Scheibe bei der schwenkenden Wischbewegung zu folgen und so die Wischleiste 2 über ihre gesamte Länge an die zu wischende Scheibe anzudrücken. Die spezielle Ausgestaltung des Tragelementes 6 ist detaillierter in der DE 103 35 394 A1 beschrieben, auf die diesbezüglich verwiesen wird.

An der der Wischleiste 2 gegenüberliegenden Oberseite 8 des Trageelementes befindet sich eine Windabweisleiste 10, die in Bezug auf die Anströmrichtung gemäß Pfeil 12 des Windes bei der Vorwärtsfahrt des Fahrzeuges über eine konkav gebogene Anströmfläche 14 einen Windabweisersteg 16 ausbildet, der sich im Wesentlichen rechtwinklig zu dem Tragelement 6 erstreckt.

Dieser Windabweisersteg 16 und die windabweisende Kontur der Windabweisleiste werden im Wesentlichen durch einen Windabweiserabschnitt 18 aus einer weichelastischen Komponente gebildet, die durch Koextrusion mit einem Befestigungsabschnitt 20 verbunden ist.

Der Befestigungsabschnitt 20 hat zwei die Außenseiten des Tragelementes 6 umgreifenden Krallen 22, die über einen Brückenabschnitt 24 als einteiliges Bauteil miteinander verbunden sind. Der Brückenabschnitt 24 erstreckt sich in Anströmrichtung 12 schräg nach oben und hat einen zunächst von der in Anströmrichtung vorderen Kralle 22 leicht schräg nach oben abgehenden Anströmabschnitt 26 und einen sich daran anschließenden, mit geringer Neigung gegenüber dem Tragelement 6 schräg nach oben ausgerichteten Hauptabschnitt 28, der in Anströmrichtung einen erhabenen Punkt 30 ausbildet, der den maximal von dem Tragelement 6 beabstandeten Teil des Befestigungsabschnittes 20 ausbildet. Dieser erhabene Punkt 30 bildet ferner das in Strömungsrichtung hintere Ende des leicht schräg geneigten und zu der Oberseite leicht konkav gebogenen Hauptabschnitts 28 aus.

In Anströmrichtung 12 hinter diesem erhabenen Punkt 30 weist der Brückenabschnitt 24 einen steil auf die in Anströmrichtung 12 hinten liegende Kralle 22 abfallenden Dachabschnitt 32 auf. Der Dachabschnitt 32 hat eine leicht konkav gebogene Dachfläche 34, die mit dem Windabweiserabschnitt 18 in Kontakt steht, d. h. an der Oberseite des Brückenabschnitts 24 angeordnet ist. In einer Richtung orthogonal zu dieser Dachfläche 34 ist der Windabweiserabschnitt 18 verdickt ausgebildet, d. h. die Wandstärke des Windabweiserabschnittes 18 ist über der in Anströmrichtung 12 hinteren Kralle 22 unmittelbar benachbart zu dem Dachabschnitt 32 dicker als über den übrigen Segmenten des Befestigungsabschnittes, insbesondere der wesentlichen Länge des Hauptabschnittes 28 und dem Brückenabschnitt 24. Der Kontur des Dachabschnitts 32 folgend ist eine in Anströmrichtung 12 hinter der konkav gebogenen Anströmfläche 14 durch den Windabweiserabschnitt 18 ausgebildete Rückseite 36 jedenfalls in ihrem unteren Teil ausgehend von der hinteren Kralle 22 konkav gebogen.

Der Windabweiserabschnitt 18 ist aus einem weichelastischen Kunststoff mit einer Shore-A-Härte von zwischen 60 und 75 ausgebildet und kann aus einem thermoplastischen Elastomer, auch aus einem vernetzten thermoplastischen Elastomer, gebildet sein. Bei dem gezeigten Ausführungsbeispiel ist der Windabweiserabschnitt 18 aus dem Werkstoff SEBS gebildet und mit seiner dem Tragelement 6 gegenüberliegenden Unterseite vollflächig an die korrespondierende Oberseite des Befestigungsabschnitts 20 aufgebracht. Auch ansonsten weist das Ausführungsbeispiel keine Freiräume (Kanäle) innerhalb der Windabweisleiste 10 auf.

Bei der Montage des gezeigten Ausführungsbeispiels wird zunächst die Wischleiste 2 zwischen die beiden Blechstreifen 4 gebracht und dort durch Aufbringen der Endkappen auf das Tragelement 6 arretiert. Danach wird jedenfalls in Längsrichtung des Tragelementes 6 zumindest abschnittsweise die Windabweisleiste 10 aufgeclipst. Hierzu wird zunächst die in Anströmrichtung 12 vordere Kralle 22 über die Außenseite des Tragelementes 6 geschoben, so dass die C-förmige Öffnung der vorderen Kralle 22 das Tragelement 6 auf drei Seiten umgreift. Daraufhin wird die Windabweisleiste 10 elastisch verformt, um auch die hintere Kralle 22 um die andere Außenseite des Tragelementes 6 zu legen. Hierbei wird insbesondere der leicht nach außen konkav gebogene Hauptabschnitt 28 des Brückenabschnitts 24 und der ebenfalls konkav nach außen gekrümmte Dachabschnitt 32 stärker konkav gekrümmt. Bei Entlastung der hierzu aufgebrachten Haltekraft federt die Windabweisleiste 10 in die in der Zeichnung gezeigte Ausgangslage zurück und fasst somit an beiden Außenseiten das Tragelement.

Bei der Benutzung des Wischblattes führt die gegen die konkave Anströmfläche 14 anströmende Luft zu einer elastischen Verformung des Windabweisersteges 16. Dieser Windabweisersteg 16 verformt sich in der Darstellung der Zeichnung nach links. Hierdurch wird der untere konkav geformte Bereich der Rückseite leicht komprimiert, so dass der Dachabschnitt 32 in Richtung auf die Mittellängsachse 38, welche die Symmetrieachse des Tragelementes 6 bzw. der Wischleiste 2 bildet, gedrängt wird. Diese Kompression durch die Windkraft wird insbesondere durch den in dem unteren Teil der Rückseite 36 verdickten Windabweiserabschnitt 18 gehalten und an den Befestigungsabschnitt 20 übertragen.

Diese Übertragung der Kraft und auch die vereinfachte Montage durch verminderte Dehnkräfte zum Anclipsen wird durch die asymmetrische Gestaltung des Befestigungsabschnitts 20 begünstigt. Dieser Befestigungsabschnitt 20 gibt der Windabweisleiste 10 die wesentliche Stefigkeit, ist aber aufgrund seiner Materialeigenschaften und zusätzlich durch die asymmetrische Gestaltung durch exzentrische Anordnung des erhabenen Punktes 20 in Bezug auf die Mittellängsachse 38 einfacher elastisch umzuformen. Die asymmetrische Ausgestaltung erlaubt dementsprechend einen gewissen Ausgleich von Fertigungstoleranzen.

### Bezugszeichenliste

- 1: Wischblatt
- 2: Wischleiste
- 4: Blechstreifen
- 6: Tragelement
- 8: Oberseite
- 10: Windabweisleiste
- 12: Anströmrichtung
- 14: konkav gebogene Anströmfläche
- 16: Windabweisersteg
- 18: Windabweiserabschnitt
- 20: Befestigungsabschnitt
- 22: Kralle
- 24: Brückenabschnitt
- 26: Anströmabschnitt
- 28: Hauptabschnitt
- 30: erhabener Punkt
- 32: Dachabschnitt
- 34: Dachfläche
- 36: Rückseite
- 38: Längsmittelachse (Symmetrieachse der Wischleiste)

## Patentansprüche

1. Wischblatt zum Reinigen von Scheiben, insbesondere von Kraftfahrzeugen, mit einer gummielastischen Wischleiste (2), die an einem bandartig langgestreckten federelastischen Tragelement (6) angeordnet ist, welches an einer der Wischleiste (2) gegenüberliegenden Oberseite von einer Windabweisleiste (10) abgedeckt ist,
**dadurch gekennzeichnet,**
**dass** die Windabweisleiste (10) einen sich über die gesamte Breite des Tragelementes (6) erstreckenden und das Tragelement (6) an seiner Außenseite umgreifenden Befestigungsabschnitt (20) aus einer Hartkomponente und einen damit koextrudierten Windabweiserabschnitt (18) aus einer Weichkomponente umfasst.

2. Wischblatt nach Anspruch 1, **dadurch gekennzeichnet, dass** der Windabweiserabschnitt (18) vollflächig mit dem Befestigungsabschnitt (20) an seiner dem Tragelement (6) gegenüberliegenden Oberseite verbunden ist.

3. Wischblatt nach Anspruch 1 oder 2, **dadurch gekennzeichnet, dass** der Befestigungsabschnitt (20) in Bezug auf die Mittellängsachse (38) des Tragelementes asymmetrisch ausgebildet ist.

4. Wischblatt nach einem der vorherigen Ansprüche, **dadurch gekennzeichnet, dass** der Befestigungsabschnitt (10) die Außenseiten des Tragelementes (6) umgreifende Krallen (22) ausbildet, die über einen Brückenabschnitt (24) miteinander verbunden sind, der sich im Wesentlichen schräg zu dem Tragelement (6) erstreckt.

5. Wischblatt nach Anspruch 4, **dadurch gekennzeichnet, dass** ein maximal über dem Tragelement (6) erhabener Punkt (30) des Brückenabschnitts (24) von einer konkav gebogenen Anströmfläche (14) des Windabweiserabschnittes (18) bedeckt ist.

6. Wischblatt nach Anspruch 4 oder 5, **dadurch gekennzeichnet, dass** der Befestigungsabschnitt (20) zwischen der in Anströmrichtung (12) hinteren Kralle (22) und den gegenüber dem Tragelement (6) maximal erhabenen Punkt (30) des Brückenabschnitts (24) einen steil auf die Kralle (22) abfallenden Dachabschnitt (32) ausbildet.

7. Wischblatt nach Anspruch 6, **dadurch gekennzeichnet, dass** der Windabweiserabschnitt (20) in einer zu der Dachfläche (34) orthogonalen Richtung verdickt ausgebildet ist.

8. Wischblatt nach einem der vorherigen Ansprüche, **dadurch gekennzeichnet, dass** der Befestigungsabschnitt (20) in etwa mit konstanter Wandstärke ausgebildet ist.

9. Wischblatt nach einem der vorherigen Ansprüche, **dadurch gekennzeichnet, dass** die Weichkomponente eine Härte von zwischen 60 und 75 Shore-A hat.

10. Wischblatt nach einem der vorherigen Ansprüche, **dadurch gekennzeichnet, dass** die Hartkomponente eine Härte von zwischen 35 und 45 Shore-D hat.
